# EUROPÄISCHE PATENTSCHRIFT

(11) **EP 3 168 587 B1**
(45) Veröffentlichungstag und Bekanntmachung des Hinweises auf die Patenterteilung: **09.01.2019**
(21) Anmeldenummer: 16197516.4
(22) Anmeldetag: 07.11.2016
(51) Int. Cl.: G01L 25/00

(54) **PRÜFVORRICHTUNG FÜR DIE DAUERPRÜFUNG VON KRAFTSENSOREN**
ARRANGEMENT FOR STRESS TESTING FORCE SENSORS
DISPOSITIF DE CONTRÔLE CONTINU DE CAPTEURS DE FORCE

(30) Priorität: 11.11.2015 DE 102015222246
(43) Veröffentlichungstag der Anmeldung: 17.05.2017
(73) Patentinhaber: ROBERT BOSCH GMBH, 70442 Stuttgart (DE)
(72) Erfinder: Cromme, Peter, 96050 Bamberg (DE); Pohl, Gerd, 02906 Waldhufen Thiemendorf (DE); Fink, Manfred, 91083 Baiersdorf (DE)

(56) Entgegenhaltungen:
- EP-A2- 1 293 765
- US-A- 5 194 205
- US-A1- 2011 270 564

## Beschreibung

Die Erfindung betrifft eine Prüfvorrichtung für die Dauerprüfung eines Kraftsensors oder einer Stapelung von Kraftsensoren, welche insbesondere mit Kraft- beziehungsweise Drucksensoren zur Nadelschließzeitpunkterkennung in Kraftstoffinjektoren verwendbar ist.

### Stand der Technik

Kraftstoffinjektoren in Common-Rail-Einspritzsystemen weisen eine beweglich geführte Düsennadel auf, über deren Hubbewegung eine Einspritzöffnung freigebbar und verschließbar ist. Für die Verbrauchs- und Umwelteigenschaften des Motors ist es entscheidend, dass die Einspritzöffnung zu genau definierten Zeiten freigegeben ist und eine genau definierte Menge an Kraftstoff in den Brennraum eindosiert. Aufgrund von Verschleiß kann sich das Betriebsverhalten des Kraftstoffinjektors über die Lebensdauer verändern, so dass die Ansteuerparameter entsprechend angepasst werden müssen, damit der Kraftstoff weiterhin nach dem vorgegebenen Zeitprogramm eindosiert wird.

Hierzu ist es aus der DE 10 2011 078 947 A1 bekannt, das Betriebsverhalten eines Kraftstoffinjektors mit einem Kraft- oder einem Drucksensor zu überwachen. Zur Sicherstellung der Dauerhaltbarkeit und Funktion derartiger Sensoren ist es wünschenswert, diese Sensoren einer Dauerprüfung unterziehen zu können. Da die Haltbarkeit der Sensoren für ein ganzes Fahrzeugleben ausgelegt ist, ist eine solche Dauerprüfung nur als Rafftest praktikabel, der die im Laufe eines Fahrzeuglebens insgesamt wirkenden Belastungen innerhalb einer wesentlich kürzeren Zeitspanne simuliert. Zur Durchführung eines solchen Rafftests steht bislang noch keine geeignete Prüfvorrichtung zur Verfügung.

Weiter sind aus US 2011/270564 A1, US 5 194 205 A und EP 1 293 765 A2 Prüfvorrichtungen bzw. Kalibriervorrichtungen bekannt, mit denen sich Piezosensoren bzw. Stapel von Piezosensoren prüfen bzw. kalibrieren lassen.

### Offenbarung der Erfindung

Im Rahmen der Erfindung wurde eine Prüfvorrichtung für die Dauerprüfung oder in-situ-Messung der piezoelektrischen Eigenschaften eines Kraftsensors oder einer Stapelung von Kraftsensoren entwickelt. Diese Prüfvorrichtung umfasst eine Kraftquelle zur Einleitung einer definierten Prüfkraft Fp in den Kraftsensor oder in die Stapelung von Kraftsensoren. Erfindungsgemäß enthält die Kraftquelle mindestens einen piezoelektrischen Aktor.

Es wurde erkannt, dass die physikalischen Mechanismen, die einen Kraftsensor möglicherweise degradieren, maßgeblich von der Anzahl der Kraftzyklen abhängen, mit denen der Kraftsensor beaufschlagt wird. Damit ein Rafftest aussagekräftig wird, sollte der Kraftsensor also in einer vergleichsweise kurzen Zeit mit der gleichen Anzahl Kraftzyklen beaufschlagt werden wie normalerweise in einem ganzen Fahrzeugleben. Der Schlüssel hierzu ist, die Kraftzyklen mit einer gegenüber dem normalen Betrieb wesentlich höheren Frequenz zu fahren. Ein piezoelektrischer Aktor ist geeignet, Kräfte von der Größenordnung, wie sie im Kraftstoffinjektor auftreten, mit der geforderten hohen Frequenz zu modulieren. Ein piezoelektrischer Aktor ist außerdem sehr kompakt, so dass er sich beispielsweise in eine Prüfvorrichtung integrieren lässt, mit der die piezoelektrische Ladungskonstante eines piezoelektrischen Kraftsensors in-situ unter mechanischer Belastung bestimmt werden kann. Damit kann das Verhalten des Kraftsensors in der vorgesehenen Anwendung bewertet werden.

Die Kraftquelle der erfindungsgemäßen Prüfvorrichtung enthält zusätzlich mindestens eine den Kraftsensor oder die Stapelung von Kraftsensoren mit einer Vorspannkraft F₁ belastende Vorspannfeder. Dann muss der piezoelektrische Aktor die auf den Kraftsensor, beziehungsweise auf die Stapelung von Kraftsensoren, ausgeübte Prüfkraft Fp nicht vollständig aufbringen, sondern lediglich ausgehend von der Vorspannkraft F₁ modulieren. Der piezoelektrische Aktor wird während der Dauerprüfung dann im Mittel mit einer geringeren Spannung belastet, was seine Dauerhaltbarkeit verbessert.

Erfindungsgemäß ist weiterhin ein drehbar gelagerter Hebel vorgesehen, der ein erstes, aus der angreifenden Kraft F₁ der Vorspannfeder abgeleitetes Drehmoment µ₁ sowie ein zweites, aus der angreifenden Kraft F_{A} des piezoelektrischen Aktors abgeleitetes Drehmoment µ_{A} aufnimmt. Der Hebel übt eine aus dem resultierenden Drehmoment µ_{R} abgeleitete Kraft F_{R} auf den Kraftsensor oder auf die Stapelung von Kraftsensoren aus. Es wurde erkannt, dass es beim Rafftest des Kraftsensors, beziehungsweise der Stapelung von Kraftsensoren, nicht darauf ankommt, Bewegungen über einen definierten Weg auszuführen. Maßgeblich ist allein die ausgeübte Prüfkraft F_{P}, die in dieser Ausgestaltung beispielsweise identisch mit der resultierenden Kraft F_{R} sein kann. Dementsprechend können die verschiedenen Hebelarme, mit denen Kräfte beziehungsweise Drehmomente in den Hebel eingeleitet beziehungsweise aus ihm ausgeleitet werden, zur Einstellung einer Gewichtung zwischen der Kraft F₁ der Vorspannfeder einerseits und der Kraft F_{A} des piezoelektrischen Aktors andererseits genutzt werden. Hierbei kann beispielsweise die Kraft F_{A} des piezoelektrischen Aktors übergewichtet werden, um dessen Belastung durch hohe elektrische Felder zu minimieren.

In vorteilhafter Ausgestaltung der Erfindung wirkt der piezoelektrische Aktor der Vorspannfeder entgegen wirkt. Ein Kraftstoffinjektor ist ein normal-geschlossenes Ventil. Eine zur Nadelschließzeitpunkterkennung verwendeter Kraft- oder Drucksensor ist daher fast über die gesamte Zeit mit dem kompletten Schließdruck der Düsennadel beaufschlagt. Er wird nur für die kurzen Momente zumindest teilweise entlastet, in denen der Injektor für den Durchtritt von Kraftstoff in den Brennraum geöffnet ist. Soll ein piezoelektrischer Aktor ständig eine hohe Kraft ausüben, ist er auch ständig mit einem hohen elektrischen Feld beaufschlagt. Dies kann auf die Dauer dazu führen, dass das piezoelektrische Material des Aktors ermüdet, d.h. seine piezoelektrische Wirkung verliert oder verringert. Wirkt hingegen der piezoelektrische Aktor der Vorspannfeder entgegen, so wird er nur für die kurzen Momente, in denen der Kraftsensor, beziehungsweise die Stapelung von Kraftsensoren, entlastet werden soll, mit einem elektrischen Feld beaufschlagt. Ein Kraftstoffinjektor ist in einem Arbeitszyklus typischerweise für weniger als 10 % der Zeit für den Durchtritt von Kraftstoff geöffnet. Für eine entsprechend kurze Zeit ist im Rahmen des Rafftests der Kraftsensor, beziehungsweise die Stapelung von Kraftsensoren, zu entlasten.

In einer weiteren besonders vorteilhaften Ausgestaltung der Erfindung übt der Hebel die aus dem resultierenden Drehmoment µ_{R} abgeleitete Kraft F_{R} über einen Stößel und einen Druckbolzen auf den Kraftsensor oder auf die Stapelung von Kraftsensoren aus. Dabei ist eine zweite Vorspannfeder am Stößel befestigt, die den Druckbolzen mit einer Vorspannkraft F₂ in Richtung auf den Kraftsensor oder auf die Stapelung von Kraftsensoren treibt. Die Kraft F_{R} lässt sich dann vorteilhaft besonders einfach zwischen einem durch die zweite Vorspannkraft F₂ vorgegebenen Minimalwert und einem durch die Summe aus den beiden Vorspannkräften F₁ und F₂ vorgegebenen Maximalwert modulieren. Dazu ist lediglich die Wirkung der Kraft F₁ ganz oder teilweise durch den piezoelektrischen Aktor aufzuheben. Damit lassen sich genau diejenigen Belastungszyklen nachbilden, denen Kraftsensoren zur Nadelschließzeitpunkterkennung in Kraftstoffinjektoren ausgesetzt sind. Auch wenn der Injektor für den Durchtritt von Kraftstoff geöffnet ist, ist der Kraftsensor noch immer einer Vorspannkraft ausgesetzt.

In einem Beispiel, das das Verständnis der Erfindung erleichtert, ist eine erste Regelschleife vorgesehen, die eine im Bereich des Kraftsensors oder der Stapelung von Kraftsensoren gemessene Temperatur T als Eingabe erhält und diese Temperatur T durch Beaufschlagung einer Heizung oder Kühlung mit einer Stellgröße auf einen vorgegebenen Sollwert regelt. Dann kann das Verhalten des Kraftsensors, beziehungsweise der Stapelung von Kraftsensoren, originalgetreu unter simultaner thermischer und mechanischer Belastung, wie sie im Betrieb des Fahrzeugs auftritt, erprobt werden. Gerade wechselnde thermische Belastungen erhöhen bei vielen technischen Systemen den Verschleiß und/oder die Alterung der Komponenten.

In einem weiteren Beispiel, das das Verständnis der Erfindung erleichtert, ist der Kraftsensor oder die Stapelung von Kraftsensoren zwischen die Kraftquelle und einen Aufnehmer für die Prüfkraft F_{P} gelagert. Dann steht eine quantitative Eichung für den Wert der Prüfkraft F_{P} zur Verfügung. Insbesondere kann eine zweite Regelschleife vorgesehen sein, die die zur Aufnahme registrierte Prüfkraft mehr einem einzelnen Kraftsensor zuordnen lassen, wird der schaltungstechnische Aufwand deutlich vermindert.

Die Erfindung stellt also erstmals ein Erprobungssystem bereit, mit dessen Hilfe die piezoelektrische Ladungskonstante von piezoelektrischen Kraftsensoren in-situ, also während zyklischer mechanischer und/oder thermischer Belastung, bestimmt werden kann. Somit kann das Verhalten von Kraftsensoren unter den gleichen Bedingungen, wie sie in Injektoren beim Einsatz zur Nadelschließzeitpunkterkennung herrschen, realitätsnah bewertet werden. Die Ladungskonstante ist das Verhältnis der erzeugten Ladung beziehungsweise Spannung für Prüfkraft Fp. Die Vorrichtung ist so kompakt gebaut, dass mehrere dieser Prüfvorrichtungen parallel auf eingeschränktem Bauraum betrieben werden können. Dies ermöglicht eine wirtschaftliche Erprobung einer Vielzahl von Kraftsensoren.

Nach dem zuvor Gesagten bezieht sich die Erfindung auch auf ein Verfahren zur Dauerprüfung eines Kraftsensors oder einer Stapelung von Kraftsensoren. Dabei gilt sämtliche für die Prüfvorrichtung gegebene Offenbarung ausdrücklich auch für das Verfahren und umgekehrt. Der Kraftsensor oder die Stapelung von Kraftsensoren wird durch die Kombination mindestens zweier Vorspannkräfte F₁ und F₂ belastet.

Erfindungsgemäß wird der Kraftsensor oder die Stapelung von Kraftsensoren periodisch von mindestens einer Vorspannkraft F₁ zumindest teilweise entlastet. Es wurde erkannt, dass auf diese Weise die auf den Kraftsensor ausgeübte Prüfkraft F_{P} besonders einfach in einem Bereich zwischen zwei Werten moduliert werden kann. Beispielsweise kann einer dieser Werte der Vorspannkraft F₂ entsprechen, und der andere Wert kann der Summe oder der Differenz der beiden Vorspannkräfte F₁ und F₂ entsprechen. Damit kann das Verhalten von Kraftsensoren in Anwendungen simuliert werden, in denen die Sensoren permanent einer Mindestvorspannkraft ausgesetzt sind.

Die Entlastung von der Vorspannkraft F₁ kann in einer besonders vorteilhaften Ausgestaltung der Erfindung durch periodische Ansteuerung eines Aktors erfolgen, der der Vorspannkraft F₁ entgegen wirkt. Dabei kann es sich insbesondere um einen piezoelektrischen Aktor handeln. In Anwendungen, in denen für den größten Teil der Zeit eine durch die Vorspannkräfte F₁ und F₂ bestimmte Prüfkraft F_{P} erforderlich ist und nur für einen geringen Teil der Zeit hiervon abweichende Werte der Prüfkraft F_{P} benötigt werden, kann so die Belastung des Aktors minimiert werden.

In einer besonders vorteilhaften Ausgestaltung der Erfindung wird das Verfahren an einem Kraftsensor oder an einer Stapelung von Kraftsensoren durchgeführt, die für den Einsatz in einem Kraftfahrzeug vorgesehen sind. Dabei ist die Periode der zumindest teilweisen Entlastung von der Vorspannkraft F₁ mindestens 50mal, bevorzugt mindestens 100mal, schneller als im realen Einsatz des Kraftsensors, bzw. der Stapelung der Kraftsensoren, in dem Kraftfahrzeug. Das Verfahren ist dann ein besonders vorteilhafter Rafftest.

In einer, speziell im Zusammenhang mit einem Rafftest, weiteren besonders vorteilhaften Ausgestaltung der Erfindung erfolgt die Ansteuerung des Aktors mit einer Frequenz zwischen 100 und 1.000 Hz, bevorzugt mit einer Frequenz zwischen 150 und 500 Hz. Ganz besonders bevorzugt erfolgt die Ansteuerung des Aktors mit einer Frequenz um 200 Hz. Die gesamte Zyklenanzahl, mit der ein für die Nadelschließzeitpunkterkennung in einem Kraftstoffinjektor eingesetzter Kraftsensor in einem Fahrzeugleben beaufschlagt wird, kann dann in wenigen Wochen durchfahren werden.

Besonders vorteilhaft ist der piezoelektrische Aktor dazu ausgebildet, bei maximaler Ansteuerung einen Hub im Bereich zwischen 20 µm und 80 µm, bevorzugt im Bereich zwischen 50 µm und 60 µm, zu erzeugen. Besonders bevorzugt ist der piezoelektrische Aktor weiterhin dazu ausgebildet, bei maximaler Ansteuerung eine Kraft F_{A} im Bereich zwischen 50 N und 600 N, bevorzugt im Bereich zwischen 200 N und 500 N, auszuüben.

Die erfindungsgemäße Prüfvorrichtung kann nicht nur für ihren originären Zweck der Dauerprüfung verwendet werden. Sie kann auch für die in-situ Messung der piezoelektrischen Eigenschaften der Kraftsensoren, bzw. des piezoelektrischen Aktors, verwendet werden.

Weitere, die Erfindung verbessernde Maßnahmen werden nachstehend gemeinsam mit der Beschreibung der bevorzugten Ausführungsbeispiele der Erfindung anhand einer Figur näher dargestellt.

### Ausführungsbeispiele

Es zeigt:

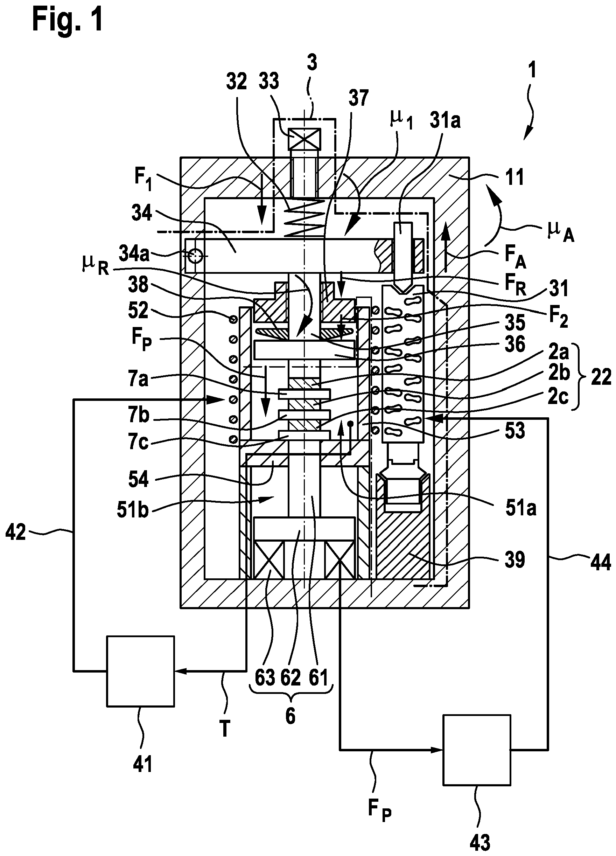

- Figur 1: schematische Darstellung einer beispielhaften Prüfvorrichtung 1 gemäß der vorliegenden Erfindung.

In Figur 1 ist eine beispielhafte Prüfvorrichtung 1 gemäß der Erfindung schematisch dargestellt. In dem in Figur 1 gezeigten Zustand ist in die Prüfvorrichtung 1 eine Stapelung 22 aus drei Kraftsensoren 2a, 2b und 2c eingesetzt, die jeweils an einen elektrischen Kontakt 7a, 7b beziehungsweise 7c zur Messung der vom jeweiligen Kraftsensor 2a, 2b beziehungsweise 2 c erzeugten Ladung angrenzen. Die Leitungen zur Abführung dieser Ladung von den Kontakten 7a, 7b und 7c sowie die Vorrichtungen zur Auswertung dieser Ladungen sind aus Gründen der Übersichtlichkeit in Figur 1 nicht eingezeichnet.

Die Prüfvorrichtung 1 umfasst ein Gehäuse 11, in dem ein Hebel 34 um einen an der Wand des Gehäuses 11 angebrachten Drehpunkt 34a drehbar gelagert ist. Der Hebel 34 wird von oben durch eine erste Vorspannfeder 32, deren Druck durch eine erste Vorspannschraube 33 einstellbar ist, mit einer ersten Vorspannkraft F₁ beaufschlagt. Diese Vorspannkraft F₁ leitet ein Drehmoment µ₁ in den Hebel 34 ein. Ein piezoelektrischer Aktor 31, der durch einen hydraulischen Koppler 39 als automatischen Längenausgleich spielfrei in der Prüfvorrichtung 1 gehalten wird, übt auf den Hebel 34 eine Kraft F_{A} aus, die der ersten Vorspannkraft F₁ entgegen wirkt. Dementsprechend wirkt auch das durch die Kraft F_{A} in den Hebel 34 eingeleitete Drehmoment µ_{A} dem der Vorspannkraft F₁ zugeordneten Drehmoment µ₁ entgegen. Das resultierende Drehmoment µ_{R} wird als resultierende Kraft F_{R} in den Stößel 35 eingeleitet. An einer entlang dieses Stößels 35 verstellbaren zweiten Vorspannschraube 37 ist eine zweite Vorspannfeder 38 befestigt, die den Druckbolzen 36 mit einer Vorspannkraft F₂ in Richtung auf die Stapelung 22 der Kraftsensoren 2a, 2b, 2c treibt. Zusätzlich ist der Druckbolzen 36 über den Stößel 35 unmittelbar mit der resultierenden Kraft F_{R} beaufschlagt. Die resultierende Kraft F_{R} und die Vorspannkraft F₂ der zweiten Vorspannfeder 38 addieren sich zu der Gesamt-Prüfkraft F_{P}, mit der die Stapelung 22 der Kraftsensoren 2a, 2b, 2c beaufschlagt wird. Dabei ist über eine Einstellschraube 31a einstellbar, welche Kraft der piezoelektrische Aktor 31 bei Beaufschlagung mit einer gegebenen elektrischen Stellgröße (z.B. Spannung) auf den Hebel 34 ausübt.

Der piezoelektrische Aktor 31, die Einstellschraube 31a, der Hebel 34 mit Drehpunkt 34a, die erste Vorspannfeder 32 mit Vorspannschraube 33, der Stößel 35, der Druckbolzen 36 sowie die zweite Vorspannfeder 38, die über die Vorspannschraube 37 am Stößel 35 befestigt ist, bilden zusammen die Kraftquelle 3. Zu dieser Kraftquelle 3 ist auch der hydraulische Koppler 39 zu zählen, der den piezoelektrischen Aktor 31 im Wege eines automatischen Längenausgleichs spielfrei in der Prüfvorrichtung 1 hält.

Die Gesamt-Prüfkraft F_{P} wird über die Stapelung 22 aus den Kraftsensoren 2a, 2b und 2c mit zugehörigen Kontakten 7a, 7b und 7c auf einen Aufnehmer 6 für die Prüfkraft F_{P} geleitet. Dieser Aufnehmer 6 umfasst einen Bolzen 61, auf dem der Kontakt 7c des untersten Kraftsensors 2c der Stapelung 22 aufliegt, einen Stempel 62 und eine Druckdose 63 als Kraftsensor. Der von der Druckdose 63 registrierte Wert der Prüfkraft F_{P} wird von einer Regelschleife 43 registriert. Die Regelschleife 43 beaufschlagt den piezoelektrischen Aktor 31 mit einer Stellgröße 44, um die gemessene Prüfkraft F_{P} auf einen vorgegebenen Sollwert zu regeln.

Die Hülse 53 beinhaltet den Druckbolzen 36 sowie den Stempel 62. Der Druckbolzen 36 ist in dieser Hülse 53 geführt. Der Stempel 62 ist über ein in Figur 1 nicht eingezeichnetes Verbindungselement mit der Druckdose 63 des Aufnehmers 6 verbunden. Die Hülse 53 ist durch eine Trennwand 54 in einen oberen Bereich 51a, in dem die Stapelung 22 der Kraftsensoren 2a, 2b und 2c angeordnet ist, und in einen unteren Bereich 51b, der die Druckdose 63 beherbergt, unterteilt. Der obere Bereich 51a ist durch eine Heizung 52, die die Hülse 53 in diesem Bereich umgibt, heizbar. Die im Bereich 51a herrschende Temperatur T wird einer Regelschleife 41 zugeführt, die die Heizung 52 mit einer Stellgröße 42 beaufschlagt, um die Temperatur T auf einen vorbestimmten Sollwert zu regeln.

In der in Figur 1 gezeigten Anordnung wirkt im nicht angesteuerten Zustand des piezoelektrischen Aktors 31, wenn also die Kraft F_{A} = 0 ist, die Summe der beiden Vorspannkräfte F₁ und F₂ als Prüfkraft Fp. Ist hingegen der piezoelektrische Aktor 31 maximal angesteuert, so hebt er den Hebel 34 vom Stößel 35 ab, so dass die Kraft F₁ nicht mehr auf den Stößel 35 wirkt. Die Kraft F_{P} ist dann identisch mit der Vorspannkraft F₂ der zweiten Vorspannfeder 38. Durch Ansteuerung des piezoelektrischen Aktors 31 kann jede Prüfkraft F_{P} im Bereich zwischen diesen beiden Extremwerten eingestellt werden.

## Patentansprüche

1. Prüfvorrichtung (1) für die Dauerprüfung oder in-situ-Messung der piezoelektrischen Eigenschaften eines Kraftsensors (2a, 2b, 2c) oder einer Stapelung (22) von Kraftsensoren (2a, 2b, 2c), umfassend eine Kraftquelle (3) zur Einleitung einer definierten Prüfkraft F_{P} in den Kraftsensor (2a, 2b, 2c) oder in die Stapelung (22) von Kraftsensoren (2a, 2b, 2c), wobei die Kraftquelle (3) mindestens einen piezoelektrischen Aktor (31) und zusätzlich mindestens eine den Kraftsensor (2a, 2b, 2c) oder die Stapelung (22) von Kraftsensoren (2a, 2b, 2c) mit einer Vorspannkraft F₁ belastende Vorspannfeder (32) enthält, **dadurch gekennzeichnet, dass** ein drehbar gelagerter Hebel (34) vorgesehen ist, der ein erstes, aus der angreifenden Kraft F₁ der Vorspannfeder (32) abgeleitetes Drehmoment µ₁ sowie ein zweites, aus der angreifenden Kraft F_{A} des piezoelektrischen Aktors (31) abgeleitetes Drehmoment µ_{A} aufnimmt und der eine aus dem resultierenden Drehmoment µ_{R} abgeleitete Kraft F_{R} auf den Kraftsensor (2a, 2b, 2c) oder auf die Stapelung (22) von Kraftsensoren (2a, 2b, 2c) ausübt..

2. Prüfvorrichtung (1) nach Anspruch 1, **dadurch gekennzeichnet, dass** der piezoelektrische Aktor (31) der Vorspannfeder (32) entgegenwirkt.

3. Prüfvorrichtung (1) nach Anspruch 1, **dadurch gekennzeichnet, dass** der Hebel (34) die aus dem resultierenden Drehmoment µ_{R} abgeleitete Kraft F_{R} über einen Stößel (35) und einen Druckbolzen (36) auf den Kraftsensor (2a, 2b, 2c) oder auf die Stapelung (22) von Kraftsensoren (2a, 2b, 2c) ausübt, wobei eine zweite Vorspannfeder (38) am Stößel (35) befestigt ist, die den Druckbolzen (36) mit einer Vorspannkraft F₂ in Richtung auf den Kraftsensor (2a, 2b, 2c) oder auf die Stapelung (22) von Kraftsensoren (2a, 2b, 2c) treibt.

4. Verfahren zur Dauerprüfung eines Kraftsensors (2a, 2b, 2c) oder einer Stapelung (22) von Kraftsensoren (2a, 2b, 2c) unter Verwendung einer Prüfvorrichtung nach einem der Ansprüche 1, 2 oder 3, wobei der Kraftsensor (2a, 2b, 2c) oder die Stapelung (22) von Kraftsensoren (2a, 2b, 2c) durch die Kombination mindestens zweier Vorspannkräfte F₁ und F₂ belastet wird, **dadurch gekennzeichnet, dass** der Kraftsensor (2a, 2b, 2c) oder die Stapelung (22) von Kraftsensoren (2a, 2b, 2c) periodisch von mindestens einer Vorspannkraft F₁ zumindest teilweise entlastet wird.

5. Verfahren nach Anspruch 4, **dadurch gekennzeichnet, dass** die Entlastung von der Vorspannkraft F₁ durch periodische Ansteuerung eines Aktors (31) erfolgt, der der Vorspannkraft F₁ entgegenwirkt.

6. Verfahren nach einem der Ansprüche 4 oder 5, **dadurch gekennzeichnet, dass** es an einem Kraftsensor (2a, 2b, 2c) oder an einer Stapelung (22) von Kraftsensoren (2a, 2b, 2c) durchgeführt wird, die für den Einsatz in einem Kraftfahrzeug vorgesehen sind, wobei die Periode der zumindest teilweisen Entlastung von der Vorspannkraft F₁ mindestens 50mal, bevorzugt mindestens 100mal, schneller ist als im realen Einsatz des Kraftsensors (2a, 2b, 2c), bzw. der Stapelung (22) der Kraftsensoren (2a, 2b, 2c), in dem Kraftfahrzeug.

7. Verfahren nach einem der Ansprüche 4 bis 6, **dadurch gekennzeichnet, dass** die Ansteuerung des Aktors (31) mit einer Frequenz zwischen 100 und 1000 Hz, bevorzugt mit einer Frequenz zwischen 150 und 500 Hz, erfolgt.

## Claims

1. Test device (1) for the continuous testing or in-situ measurement of the piezoelectric properties of a force sensor (2a, 2b, 2c) or of a stack (22) of force sensors (2a, 2b, 2c), comprising a force source (3) for introducing a defined test force Fp into the force sensor (2a, 2b, 2c) or into the stack (22) of force sensors (2a, 2b, 2c), wherein the force source (3) contains at least one piezoelectric actuator (31) and additionally at least one prestressing spring (32) which loads the force sensor (2a, 2b, 2c) or the stack (22) of force sensors (2a, 2b, 2c) with a prestressing force F₁, **characterized in that** a rotatably mounted lever (34) is provided, which lever takes up a first torque µ₁ derived from the acting force F₁ of the prestressing spring (32) and a second torque µ_{A} derived from the acting force F_{A} of the piezoelectric actuator (31) and exerts a force F_{R} derived from the resulting torque µ_{R} on the force sensor (2a, 2b, 2c) or on the stack (22) of force sensors (2a, 2b, 2c).

2. Test device (1) according to Claim 1, **characterized in that** the piezoelectric actuator (31) counteracts the prestressing spring (32).

3. Test device (1) according to Claim 1, **characterized in that** the lever (34) exerts the force F_{R} derived from the resulting torque µ_{R} on the force sensor (2a, 2b, 2c) or on the stack (22) of force sensors (2a, 2b, 2c) via a plunger (35) and a pressure pin (36), wherein a second prestressing spring (38) is fastened to the plunger (35) and drives the pressure pin (36) with a prestressing force F₂ in the direction of the force sensor (2a, 2b, 2c) or the stack (22) of force sensors (2a, 2b, 2c).

4. Method for the continuous testing of a force sensor (2a, 2b, 2c) or a stack (22) of force sensors (2a, 2b, 2c) using a test device according to one of Claims 1, 2 and 3, wherein the force sensor (2a, 2b, 2c) or the stack (22) of force sensors (2a, 2b, 2c) is loaded by the combination of at least two prestressing forces F₁ and F₂, **characterized in that** the force sensor (2a, 2b, 2c) or the stack (22) of force sensors (2a, 2b, 2c) is periodically at least partially relieved of at least one prestressing force F₁.

5. Method according to Claim 4, **characterized in that** the prestressing force F₁ is relieved by periodically controlling an actuator (31) which counteracts the prestressing force F₁.

6. Method according to either of Claims 4 and 5, **characterized in that** it is carried out on a force sensor (2a, 2b, 2c) or on a stack (22) of force sensors (2a, 2b, 2c) provided for use in a motor vehicle, wherein the period of the at least partial relief of the prestressing force F₁ is at least 50 times faster, preferably at least 100 times faster, than in real use of the force sensor (2a, 2b, 2c) or the stack (22) of force sensors (2a, 2b, 2c) in the motor vehicle.

7. Method according to one of Claims 4 to 6, **characterized in that** the actuator (31) is controlled with a frequency of between 100 and 1000 Hz, preferably with a frequency of between 150 and 500 Hz.

## Revendications

1. Dispositif de contrôle (1) pour le contrôle continu ou la mesure sur site des propriétés piézoélectriques d'un capteur de force (2a, 2b, 2c) ou d'un empilement (22) de capteurs de force (2a, 2b, 2c), comprenant une source de force (3) destinée à induire une force d'essai Fp définie dans le capteur de force (2a, 2b, 2c) ou dans l'empilement (22) de capteurs de force (2a, 2b, 2c), la source de force (3) contenant au moins un actionneur piézoélectrique (31) et en plus au moins un ressort de précontrainte (32) qui charge le capteur de force (2a, 2b, 2c) ou l'empilement (22) de capteurs de force (2a, 2b, 2c) avec une force de précontrainte F₁, **caractérisé en ce qu'**un levier (34) monté rotatif est présent, lequel absorbe un premier couple µ₁, dérivé de la force F₁ appliquée du ressort de précontrainte (32), ainsi qu'un deuxième couple µ_{A}, dérivé de la force F_{A} appliquée de l'actionneur piézoélectrique (31), et lequel applique sur le capteur de force (2a, 2b, 2c) ou sur l'empilement (22) de capteurs de force (2a, 2b, 2c) une force F_{R} dérivée du couple µ_{R} résultant.

2. Dispositif de contrôle (1) selon la revendication 1, **caractérisé en ce que** l'actionneur piézoélectrique (31) s'oppose au ressort de précontrainte (32) .

3. Dispositif de contrôle (1) selon la revendication 1, **caractérisé en ce que** le levier (34) exerce sur le capteur de force (2a, 2b, 2c) ou sur l'empilement (22) de capteurs de force (2a, 2b, 2c) la force F_{R} dérivée du couple µ_{R} résultant par le biais d'un coulisseau (35) et d'un boulon de pression (36), un deuxième ressort de précontrainte (38) étant fixé au coulisseau (35), lequel entraîne le boulon de pression (36) avec une force de précontrainte F₂ dans la direction du capteur de force (2a, 2b, 2c) ou de l'empilement (22) de capteurs de force (2a, 2b, 2c).

4. Procédé de contrôle continu d'un capteur de force (2a, 2b, 2c) ou d'un empilement (22) de capteurs de force (2a, 2b, 2c) en utilisant un dispositif de contrôle (1) selon l'une des revendications 1, 2 ou 3, le capteur de force (2a, 2b, 2c) ou l'empilement (22) de capteurs de force (2a, 2b, 2c) étant chargé par la combinaison d'au moins deux forces de précontrainte F₁ et F₂, **caractérisé en ce que** le capteur de force (2a, 2b, 2c) ou l'empilement (22) de capteurs de force (2a, 2b, 2c) sont périodiquement soulagés au moins partiellement d'au moins une force de précontrainte F₁.

5. Procédé selon la revendication 4, **caractérisé en ce que** le soulagement de la force de précontrainte F₁ s'effectue par une excitation périodique d'un actionneur (31) qui s'oppose à la force de précontrainte F₁.

6. Procédé selon la revendication 4 ou 5, **caractérisé en ce qu'**il est mis en oeuvre sur un capteur de force (2a, 2b, 2c) ou un empilement (22) de capteurs de force (2a, 2b, 2c) qui sont conçus pour l'utilisation dans un véhicule automobile, la période du soulagement au moins partiel de la force de précontrainte F₁ est au moins 50 fois, de préférence au moins 100 fois plus rapide que lors de l'utilisation réelle du capteur de force (2a, 2b, 2c) ou de l'empilement (22) de capteurs de force (2a, 2b, 2c) dans le véhicule automobile.

7. Procédé selon l'une des revendications 4 à 6, **caractérisé en ce que** l'excitation de l'actionneur (31) s'effectue avec une fréquence entre 100 et 1000 Hz, de préférence avec une fréquence entre 150 et 500 Hz.
